# EUROPEAN PATENT APPLICATION

(11) **EP 1 512 593 A1**
(43) Date of publication of application: **09.03.2005**
(21) Application number: 03103292.3
(22) Date of filing: 04.09.2003
(51) Int. Cl.: B60S 1/38, B65D 85/00, B65D 75/00

(54) **A system provided with a windscreen wiper device and with a holder for holding said windscreen wiper device**

(71) Applicant: Federal-Mogul S.A., 6790 Aubange (BE)
(72) Inventor: Pascal, Jonette, B-6790 Aubange (BE)
(74) Representative: Hooiveld, Arjen Jan Winfried

(57) **Abstract**

A system provided with
- a windscreen wiper device (1) comprising an elastic, elongated carrier element, as well as an elongated wiper blade (2) of a flexible material, which can be placed in abutment with a windscreen to be wiped, which wiper blade (2) includes opposing longitudinal grooves (3) on its longitudinal sides, in which grooves spaced-apart longitudinal strips (4) of the carrier element are disposed, wherein neighbouring ends (5) of said longitudinal strips (4) are interconnected by a respective connecting piece (6), said carrier element biassing the wiper blade in a curved position, which windscreen wiper device (1) comprises a connecting device (7) for an oscillating wiper arm;
- a holder for holding said windscreen wiper device;
with the special feature that the holder comprises a stiff tightening yoke (10) engaging the windscreen wiper device (1) at engaging locations (11,12) on opposing sides of the connecting device for tightening said windscreen wiper device (1) in a less curved position.

## Description

The present invention relates to a system provided with
- a windscreen wiper device comprising an elastic, elongated carrier element, as well as an elongated wiper blade of a flexible material, which can be placed in abutment with a windscreen to be wiped, which wiper blade includes opposing longitudinal grooves on its longitudinal sides, in which grooves spaced-apart longitudinal strips of the carrier element are disposed, wherein neighbouring ends of said longitudinal strips are interconnected by a respective connecting piece, said carrier element biassing the wiper blade in a curved position, which windscreen wiper device comprises a connecting device for an oscillating wiper arm;
- a holder for holding said windscreen wiper device.

Such a system is generally known. The known system comprises a prior art windscreen wiper device particularly designed as a "yokeless" wiper device, wherein use is no longer made of several yokes pivotally connected to each other, but wherein the wiper blade is biassed by the carrier element, as a result of which it exhibits a specific curvature. The known system further comprises a holder in the form of a cardboard transport package for holding the prior art windscreen wiper device during transport.

One drawback of this known system is the fact that due its specific curvature the windscreen wiper device thereof cannot be inserted easily in said cardboard transport package, whereas once said windscreen wiper device is taken out said cardboard transport package it cannot be handled easily, for example in an outlet for display purposes.

The object of the invention is to overcome the drawbacks of the prior art as mentioned above, in particular to make it possible that the windscreen wiper device can be efficiently held during transport, storage and display.

In order to accomplish that objective, a system of the kind referred to in the introduction is characterized in that the holder comprises a stiff tightening yoke engaging the windscreen wiper device at engaging locations on opposing sides of the connecting device for tightening said windscreen wiper device in a less curved position. Particularly, the tightening yoke tightens said windscreen wiper device in a less curved position by a pulling action at the engaging locations and by a pushing action between these engaging locations. Preferably, the pushing action takes place at the location of the connecting device. In other words, the stiff tightening yoke as a separate constructional elongate element extending along at least a portion of the length of the windscreen wiper blade, grips said wiper blade at locations on opposing sides of the connecting device, thereby stretching the wiper blade in a less curved (preferably flat) position.

It is noted that the present stiff tightening yoke can be used in combination with a package of cardboard, for example, wherein the package envelopes the windscreen wiper device equipped with the tightening yoke. In the alternative, the present stiff tightening yoke is used without such a package, so that the tightening yoke solely acts as holder during transport, storage and/or display.

In one preferred embodiment of a system in accordance with the invention the tightening yoke comprises engaging means for engaging opposing longitudinal strips at the engaging locations. The opposing longitudinal strips are particularly engaged near a respective connecting piece.

In another preferred embodiment of a system according to the invention the tightening yoke and the engaging means are made in one piece.

In another preferred embodiment of a system in accordance with the invention the tightening yoke comprises downwardly extending lips being located on opposing sides of the connecting device. As a consequence, the tightening yoke is locked relative to the connecting device against any transverse movement.

In another preferred embodiment of a system according to the invention the tightening yoke is made of a plastic material.

The invention also refers to a holder as defined in a system in accordance with the invention.

The invention also relates to a method for holding together for transport, storage and/or displaying at an outlet
- a windscreen wiper device comprising an elastic, elongated carrier element, as well as an elongated wiper blade of a flexible material, which can be placed in abutment with a windscreen to be wiped, which wiper blade includes opposing longitudinal grooves on its longitudinal sides, in which grooves spaced-apart longitudinal strips of the carrier element are disposed, wherein neighbouring ends of said longitudinal strips are interconnected by a respective connecting piece, said carrier element biassing the wiper blade in a curved position, which windscreen wiper device comprises a connecting device for an oscillating wiper arm;
- using a holder for holding said windscreen wiper device;
characterized in that the holder is provided with a stiff tightening yoke engaging the windscreen wiper device at engaging locations on opposing sides of the connecting device for tightening said windscreen wiper device in a less curved position.

The invention will now be explained in more detail with reference to figures illustrated in a drawing, wherein:
- figure 1 is a perspective, schematic view of a preferred embodiment of a windscreen wiper device without a stiff tightening yoke according to the invention;
- figure 2 relates to a detail of figure 1;
- figures 3 and 4 show several perspective, schematic views of a single stiff tightening yoke in accordance with the invention; and
- figures 5 and 6 show several perspective, schematic views of the windscreen wiper device of figures 1 and 2 equipped with the stiff tightening yoke of figures 3 and 4.

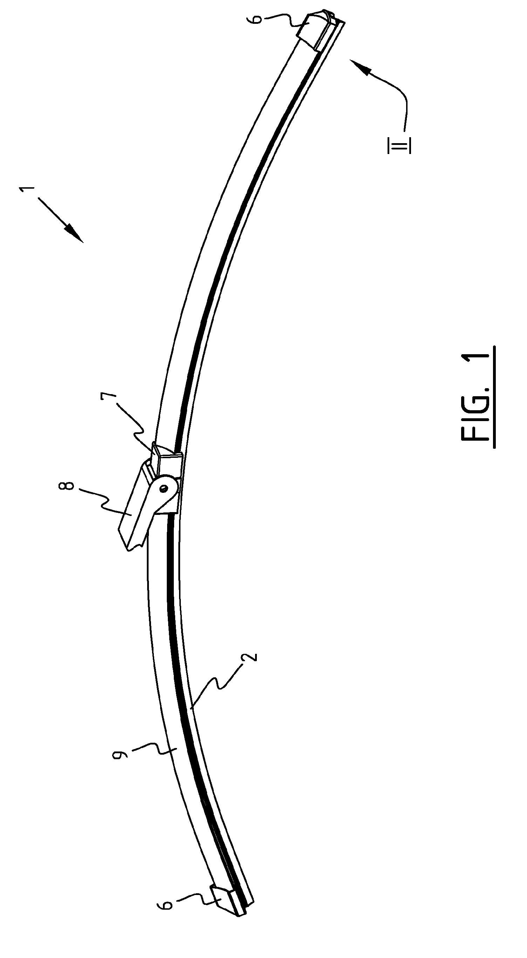

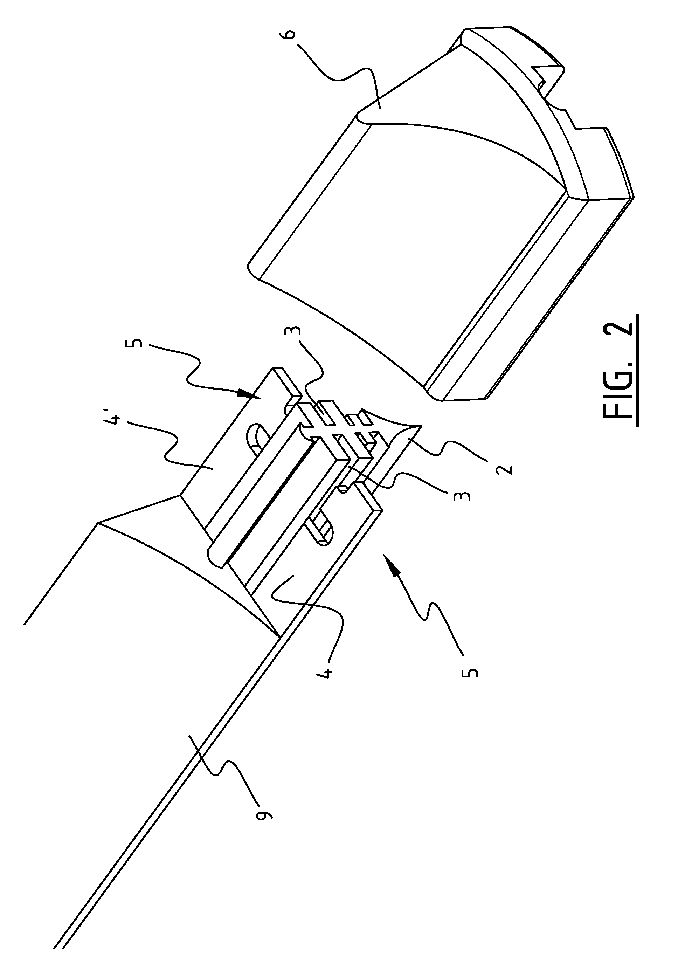

Figures 1 and 2 show a preferred variant of a windscreen wiper device 1 according to the invention. Said windscreen wiper device is built up of an elastomeric wiper blade 2, in the longitudinal sides of which opposing longitudinal grooves 3 are formed, and of longitudinal strips 4 made of spring band steel, which are fitted in said longitudinal grooves 3. Said strips 4 form a flexible carrier element for the rubber wiper blade 2, as it were, which is thus biassed in a curved position (the curvature in operative position being that of a windscreen to be wiped). Neighbouring ends 5 of strips 4 are interconnected on either side of the windscreen wiper device 1 by means of connecting pieces 6. The windscreen wiper device 1 is further equipped with a connecting device 7 for an oscillating arm 8, and a spoiler 9.

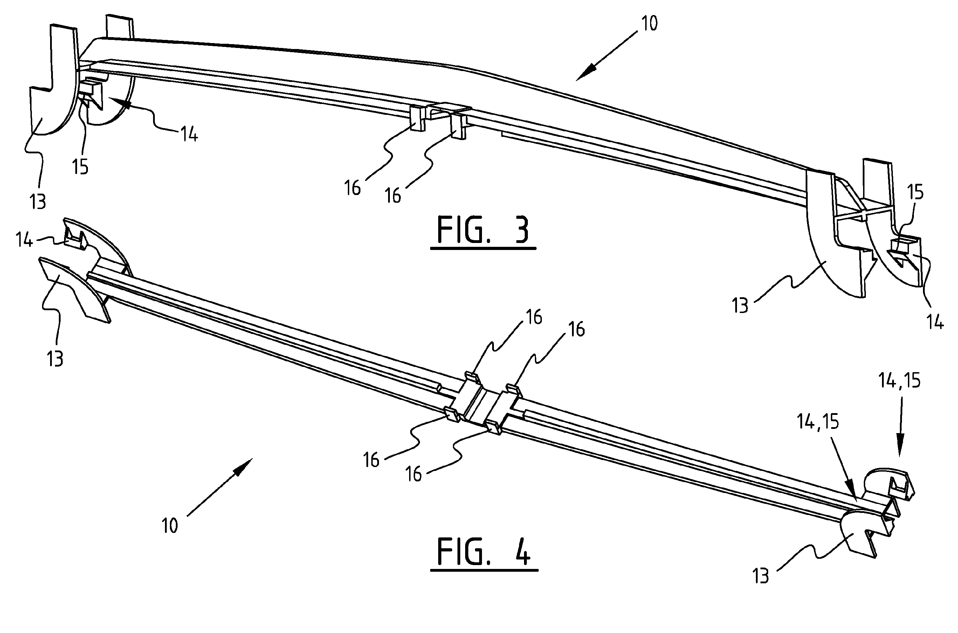

With reference to figures 3 through 6 a stiff tightening yoke 10 made of one piece of plastic and extending along a portion of the length of the wiper blade 2 engages opposing longitudinal strips 4,4' at engaging locations 11, 12 on opposing sides of the connecting device 7. As a result, the tightening yoke 10 tightens the windscreen wiper device 1 in a less curved position (i.e. in a flat longitudinal plane). As a matter of fact, said stiff tightening yoke 10 has a U-shaped cross-section near both ends, whereas each leg 13 of the U-shaped cross-section comprises a laterally inwardly extending protrusion 14 having a lip 15 acting as engaging means in order to engage one of the strips 4,4' at one of the engaging locations 11, 12.

At the location of the connecting device 7 the stiff tightening yoke 10 is provided with downwardly extending protrusions 16 on opposing sides of the connecting device 7 for locking the tightening yoke 10 relative to the connecting device 7 against any longitudinal (axial) and transverse movement in the direction of the arrows 17.

The stiff tightening yoke 10 tightens the windscreen wiper device 1 in a less curved position by a pulling action at the engaging locations 11,12 (that is, the lips 15 pull the windscreen wiper device 1 in an upward direction in the direction of the arrow 18) and by a pushing action at the location of the connecting device (i.e. the tightening yoke 10 pushes the windscreen wiper device 1 at that location in a downward direction in the direction of the arrow 19).

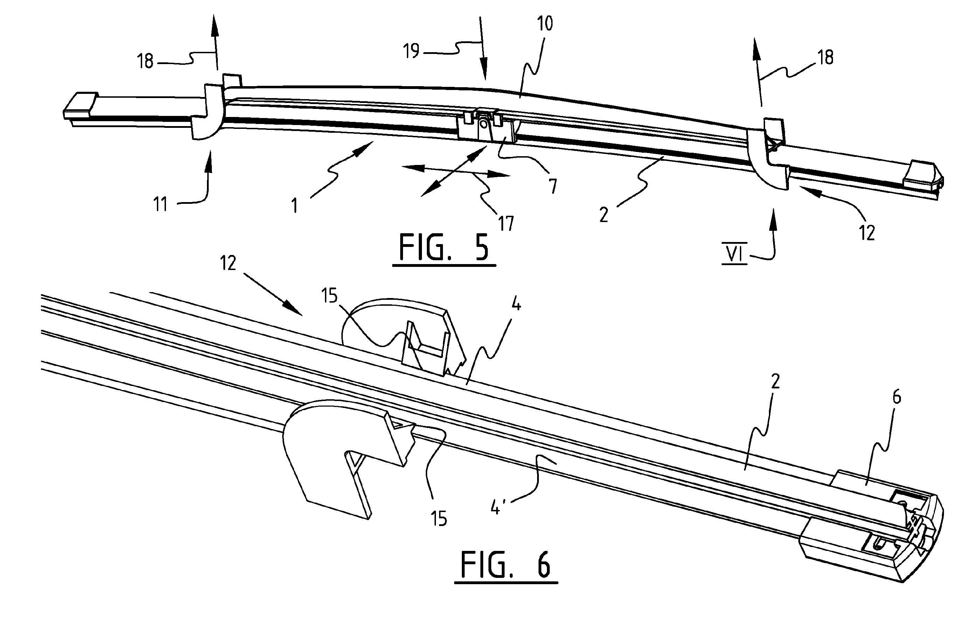

As can be seen from figures 5 and 6 the rubber wiper blade 2 is prevented from making contact with outside matters through the legs 13 of the U-shaped cross-section, and is therefore protected by these legs 13. In other words, said legs 13 have a larger height than the wiper blade 2, so that said wiper blade 2 is safely present between the legs 13.

The invention is not limited to the embodiment shown, but extends also to other embodiments falling within the scope of the appended claims. In this respect it is noted that the tightening yoke 10 may also be designed as to be able to tighten two windscreen wiper devices 1 on opposite sides of the tightening yoke 10, that is one windscreen wiper device 1 on each longitudinal side thereof. This has the advantage that there is a compensation of forces between these windscreen wiper devices 1.

## Claims

1. A system provided with
- a windscreen wiper device comprising an elastic, elongated carrier element, as well as an elongated wiper blade of a flexible material, which can be placed in abutment with a windscreen to be wiped, which wiper blade includes opposing longitudinal grooves on its longitudinal sides, in which grooves spaced-apart longitudinal strips of the carrier element are disposed, wherein neighbouring ends of said longitudinal strips are interconnected by a respective connecting piece, said carrier element biassing the wiper blade in a curved position, which windscreen wiper device comprises a connecting device for an oscillating wiper arm;
- a holder for holding said windscreen wiper device;
**characterized in that** the holder comprises a stiff tightening yoke engaging the windscreen wiper device at engaging locations on opposing sides of the connecting device for tightening said windscreen wiper device in a less curved position.

2. A system according to claim 1, wherein the tightening yoke tightens said windscreen wiper device in a less curved position by a pulling action at the engaging locations and by a pushing action between these engaging locations.

3. A system according to claim 2, wherein the tightening yoke tightens said windscreen wiper device in a less curved position by a pulling action at the engaging locations and by a pushing action at the location of the connecting device.

4. A system according to claim 1, 2 or 3, wherein the tightening yoke comprises engaging means for engaging opposing longitudinal strips at the engaging locations.

5. A system according to claim 4, wherein the engaging means engage opposing longitudinal strips at the engaging locations near a respective connecting piece.

6. A system according to claim 4 or 5, wherein the tightening yoke and the engaging means are made in one piece.

7. A system according to any of the preceding claims 1 through 6, wherein the tightening yoke comprises downwardly extending protrusions being located on opposing sides of the connecting device.

8. A system according to any of the preceding claims 1 through 7, wherein the tightening yoke is made of a plastic material.

9. A holder as defined in a system according to any of the preceding claims 1 through 8.

10. A method for holding together for transport, storage and/or displaying at an outlet
- a windscreen wiper device comprising an elastic, elongated carrier element, as well as an elongated wiper blade of a flexible material, which can be placed in abutment with a windscreen to be wiped, which wiper blade includes opposing longitudinal grooves on its longitudinal sides, in which grooves spaced-apart longitudinal strips of the carrier element are disposed, wherein neighbouring ends of said longitudinal strips are interconnected by a respective connecting piece, said carrier element biassing the wiper blade in a curved position, which windscreen wiper device comprises a connecting device for an oscillating wiper arm;
- using a holder for holding said windscreen wiper device;
**characterized in that** the holder is provided with a stiff tightening yoke engaging the windscreen wiper device at engaging locations on opposing sides of the connecting device for tightening said windscreen wiper device in a less curved position.
